# EUROPÄISCHE PATENTSCHRIFT

(11) **EP 2 344 379 B1**
(45) Veröffentlichungstag und Bekanntmachung des Hinweises auf die Patenterteilung: **11.12.2019**
(21) Anmeldenummer: 09744054.9
(22) Anmeldetag: 06.10.2009
(51) Int. Cl.: B64C 9/24

(54) **AN DER TRAGFLÄCHE EINES FLUGZEUGS ANGEORDNETER VORFLÜGEL**
FORE FLAP DISPOSED ON THE WING OF AN AIRCRAFT
BEC DE BORD D'ATTAQUE MONTÉ SUR LA SURFACE PORTANTE D'UN AVION

(30) Priorität: 06.10.2008 US 102977 P; 06.10.2008 DE 102008050544
(43) Veröffentlichungstag der Anmeldung: 20.07.2011
(73) Patentinhaber: Airbus Operations GmbH, 21129 Hamburg (DE)
(72) Erfinder: SCHLIPF, Bernhard, 28201 Bremen (DE); HUE, Xavier, 28209 Bremen (DE)
(74) Vertreter: Bird & Bird LLP
(86) Internationale Anmeldenummer: PCT/EP2009/007167
(87) Internationale Veröffentlichungsnummer: WO 2010/040501

(56) Entgegenhaltungen:
- DE-A1-102006 053 259
- US-A- 4 553 721
- US-A- 4 650 140
- US-A1- 2002 195 527
- US-A1- 2005 061 922

## Beschreibung

Die Erfindung betrifft einen an der Tragfläche eines Flugzeugs angeordneten Vorflügel.

Zur Verbesserung des Auftriebs bei einem aerodynamisch wirksamen Flügel, einer Tragfläche, sind im Stand der Technik eine große Anzahl von Hochauftriebskomponenten bekannt, welche dazu dienen, die Krümmung und/oder die Ausdehnung des Flügelprofils in Flügeltiefenrichtung zu vergrößern und damit den Auftrieb der Tragfläche zu erhöhen. Bei Hochauftriebskomponenten, die bezüglich der Strömungsrichtung an der Vorderseite des Tragflächenprofils vorgesehen sind, ist zu unterscheiden zwischen Nasenklappen, welche sich im wesentlichen ohne Unterbrechung an der Vorderseite des eigentlichen Flügels oder Hauptflügels anschließen, und Vorflügeln, bei denen es, zumindest im ausgefahrenen Zustand, zwischen der Hinterkante des Vorflügels und der Vorderkante des Hauptflügels einen Spalt gibt, durch welchen energiereiche, das heißt, mit großer Geschwindigkeit strömende Luft von der Unterseite des Vorflügels zur Oberseite des Hauptflügels geführt wird, was in einer weiteren Auftriebserhöhung resultiert.

Hochauftriebskomponenten in Form von Vorflügeln dienen bei modernen Verkehrsflugzeugen und Transportflugzeugen mit einem hohen Abfluggewicht zur Auftriebserhöhung. Bei einer der einfachsten und daher bevorzugten Kinematiken bewegt sich der Vorflügel beim Ausfahren auf einer Kreisbahn um eine sich unterhalb des vorderen Bereichs des Hauptflügels befindliche Drehachse, wobei der Vorflügel in einer eingefahrenen Reiseflugstellung an der Vorderseite des Hauptflügels anliegt und dessen Profil zu einer für den Reiseflug geeigneten Form ergänzt. Zur Erhöhung des Auftriebs wird der Vorflügel durch Schwenken um die besagte Drehachse unter Vergrößerung der Krümmung und der Ausdehnung des Gesamtflügelprofils in Flügeltiefenrichtung ausgefahren, wobei sich bei der genannten Kreisbogen-Kinematik mit dem Ausfahren des Vorflügels allmählich ein Spalt zwischen der Endkante des Vorflügels und dem Flügelprofil im Nasenbereich des Hauptflügels bildet. Während ein solcher, energiereiche Luft von der Unterseite des Vorflügels zur Oberseite des Hauptflügels führender Spalt wegen seiner den Auftrieb erhöhenden und eine Grenzschichtablösung verzögernden Wirkung für den Landeanflug von Vorteil und damit erstrebenswert ist, ist er andererseits wegen eines damit verbundenen erhöhten Widerstands für den Start nachteilig. Es wird daher allgemein angestrebt, die Betätigungs-Kinemtatik für den Vorflügel so zu gestalten, dass der Vorflügel in einer ersten, teilweise ausgefahrenen Stellung, die für den Start geeignet ist, mit seiner Endkante am Hauptflügel anliegt, und in einer zweiten, weiter ausgefahrenen Stellung, die für die Landung geeignet ist, mit seiner Endkante unter Freigabe eines solchen, energiereiche Luft von der Unterseite des Vorflügels zur Oberseite des Hauptflügels führenden Spalts von der Beplankung des Hauptflügels im Bereich von dessen Profilnase beabstandet ist.

Die DE 2006 053 259 A1 offenbart ein Öffnen und Schließen des durchströmten Spalts zwischen einer Vorderkantenklappe und dem Hauptflügel unabhängig von der Stellung der Vorderkantenklappe und insbesondere in Abhängigkeit des Anstellwinkels des Flugzeugs.

Aus US 4 399 970, US 5 839 699 und US 6 682 023 sind Hochauftriebshilfen in Form von Vorflügeln bekannt, bei denen der Vorflügel in der eingefahrenen Position, in der Start-Position und in dazwischenliegenden Positionen keinen Spalt zwischen Vorflügel und Hauptflügel freigibt. Ein solcher wird erst während des weiteren Ausfahrvorgangs des Vorflügels zur Landekonfiguration hin kontinuierlich geöffnet. Dies wird durch zusätzliche kinematische Elemente oder (bei US 5 839 699) durch eine Anpassung des Nasenprofils des Hauptflügels an die Kurvenbahn der Vorflügelendkante erreicht. Verbunden mit solchen Maßnahmen sind dementsprechend entweder ein erhöhtes Gewicht aufgrund der zusätzlichen kinematischen Elemente oder eine aerodynamisch nachteilige Spaltgeometrie bei der Anpassung der Flügelnase im letztgenannten Fall.

Weiter ist aus der US 4 753 402 ein mittels bogenförmiger Schienen gegenüber dem Hauptflügel ausfahrbarer Vorflügel bekannt, welcher um einen kleinen Winkel gegen die Schienen verdrehbar gelagert und mittels einer Blattfederanordnung so gegen die Schienen vorgespannt ist, dass der Spalt zwischen Vorflügel und Hauptflügel bei Überschreiten einer bestimmten aerodynamischen Kraft vergrößert wird, indem sich die dem Hauptflügel zugewandte, nach hinten gerichtete Endkante entgegen der Federkraft nach vorne und oben verlagert. Der Vorflügel selbst hat ein starres, unveränderliches Profil.

Die US 4 650 140 stellt den nächstliegenden Stand der Technik dar und offenbart den Obergriff des Anspruchs 1.

Die Aufgabe der Erfindung ist es, einen Vorflügel der eingangs vorausgesetzten Art so auszubilden, dass er eine strukturell einfache Konstruktion verbunden mit einer geringen Anzahl von Teilen bei gleichzeitig hoher aerodynamischer Wirksamkeit aufweist.

Die Aufgabe wird gelöst durchdie Merkmale des Anspruchs 1. Vorteilhafte Ausgestaltungen und Weiterbildungen des erfindungsgemäßen Vorflügels sind in den auf diesen rückbezogenen Unteransprüchen angegeben.

Durch die Erfindung wird insbesondere ein an der Tragfläche eines Flugzeugs angeordneter Vorflügel geschaffen, wobei die Tragfläche einen Hauptflügel mit einer oberen Beplankung, einer unteren Beplankung und einer Profilnase umfaßt und der Vorflügel an der Vorderseite des Hauptflügels vorgesehen ist und eine nach vorne gerichtete Profilnase und eine dem Hauptflügel zugewandte, nach hinten gerichtete Endkante aufweist und von einer eingefahrenen Reiseflugstellung, in welcher der Vorflügel an der Vorderseite des Hauptflügels anliegt und dessen Profil zu einer für den Reiseflug geeigneten Form ergänzt, zur Erhöhung des Auftriebs unter Vergrößerung der Krümmung und der Ausdehnung des Flügelprofils in Flügeltiefenrichtung ausfahrbar ist, wobei der Vorflügel in einer (von typischerweise mehreren) ersten, teilweise ausgefahrenen Stellung mit seiner Endkante am Hauptflügel anliegt und in einer (von typischerweise mehreren) zweiten, weiter ausgefahrenen Stellung mit seiner Endkante unter Freigabe eines energiereiche Luft von der Unterseite des Vorflügels zur Oberseite des Hauptflügels führenden Spalts von der Profilnase des Hauptflügels beabstandet ist. Erfindungsgemäß ist es vorgesehen, dass der Vorflügel einen Hauptkörper und einen dem Hauptflügel zugewandten Endkantenteil umfasst, der um die Spannweitenrichtung des Vorflügels gegenüber dem Hauptkörper abwinkelbar beweglich ist und an welchem die Endkante des Vorflügels vorgesehen ist und welcher mittels einer eine Anlagekraft erzeugenden Einrichtung bei eingefahrener und teilweise ausgefahrener Stellung des Vorflügels zur Anlage der Vorflügelendkante an der Profilnase des Hauptflügels beaufschlagt ist.

Gemäß einer Ausführungsform des erfindungsgemäßen Vorflügels ist es vorgesehen, dass der Endkantenteil über ein Gelenk mit dem Hauptkörper des Vorflügels verbunden ist, um das der Endkantenteil um die Spannweitenrichtung des Vorflügels gegenüber dem Hauptkörper abwinkelbar beweglich ist.

Gemäß einer Ausführungsform ist das Gelenk durch ein biegeelastisches Element gebildet. Gemäß einer Ausführungsform ist das biegeelastische Element an einer die Oberseite des Vorflügels bildenden Außenhaut vorgesehen.

Gemäß einer Ausführungsform ist die die Anlagekraft erzeugende Einrichtung die Unterseite des Endkantenteils mit dem Hauptkörper des Vorflügels verbindend vorgesehen.

Erfindungsgemäß
ist die die Anlagekraft erzeugende Einrichtung durch ein elastisches Element gebildet.

Dabei kann es vorgesehen sein, dass das elastische Element ein translatorisch-elastisches Element ist.

Gemäß einer nicht beanspruchten Ausführungsform des erfindungsgemäßen Vorflügels ist die die Anlagekraft erzeugende Einrichtung durch einen Aktuator gebildet.

Gemäß einer anderen Ausführungsform des erfindungsgemäßen Vorflügels ist das biegeelastische Element durch den Endkantenteil selbst gebildet, welcher zumindest in einem dem Hauptkörper des Vorflügels benachbarten Bereich durch ein elastisches, flexibles Material gebildet ist.

Gemäß einer nicht beanspruchten Ausführungsform erstreckt sich das das Gelenk bildende biegeelastische Element über im Wesentlichen die ganze Spannweite des Vorflügels.

Gemäß einer Ausführungsform erstreckt sich das die die Anlagekraft erzeugende Einrichtung bildende translatorisch-elastische Element über im Wesentlichen die ganze Spannweite des Vorflügels.

Gemäß einer nicht beanspruchten Ausführungsform ist der Aktuator durch einen Formgedächtnis-Aktuator oder einen Piezo-Aktuator gebildet.

Gemäß einer nicht beanspruchten Ausführungsform ist der Aktuator zur Steuerung mit einer Steuereinrichtung gekoppelt, durch welche der Aktuator so steuerbar ist, dass bei teilweise ausgefahrener Stellung des Vorflügels die Vorderflügelendkante zur Freigabe des Luft zur Oberseite des Hauptflügels führenden Spalts im Sinne einer Erhöhung des maximal möglichen Auftriebsbeiwerts wahlweise vom Hauptflügel abgehoben wird.

Gemäß einer anderen Weiterbildung des erfindungsgemäßen Vorflügels ist ein Anschlagelement zur Begrenzung der Abwinkelung des Endkantenteils gegenüber dem Hauptkörper des Vorflügels vorgesehen.

Dabei kann das Anschlagelement an dem die Anlagekraft erzeugenden Element vorgesehen sein.

Im Folgenden werden Ausführungsbeispiele der Erfindung anhand der Zeichnung erläutert. Es zeigen:
Fig. 1 eine schematisierte Querschnittsdarstellung eines an der Tragfläche eines Flugzeugs angeordneten Vorflügels gemäß einem Ausführungsbeispiel der Erfindung;
Fig. 2 eine vergrößerte Querschnittsansicht durch einen Vorflügel gemäß einem Ausführungsbeispiel der Erfindung;
Fig. 3a) und 3b) jeweils eine vergrößerte Querschnittsansicht eines Vorflügels gemäß zwei weiteren Ausführungsbeispielen der Erfindung;
Fig. 4 einen nochmals vergrößerten Ausschnitt eines Teils des erfindungsgemäßen Vorflügels gemäß noch einem weiteren Ausführungsbeispiel; und
Fig. 5 eine schematisierte Querschnittsdarstellung eines an der Tragfläche eines Flugzeugs angeordneten Vorflügels gemäß dem Stand der Technik.

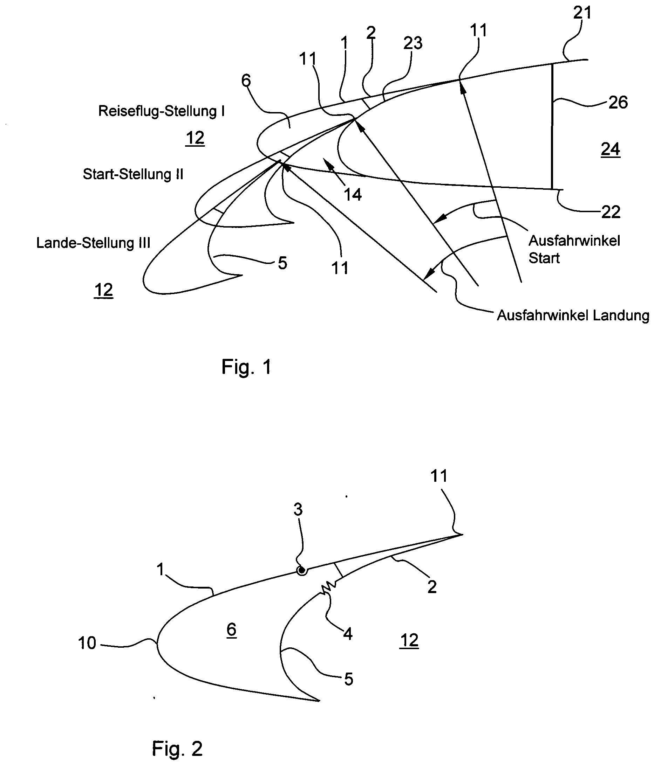

Fig. 1 zeigt einen an der Tragfläche eines Flugzeugs angeordneten Vorflügel 12. Die Tragfläche umfasst einen Hauptflügel 24, der eine obere Beplankung 21, eine untere Beplankung 22 und eine Profilnase 23 aufweist. Als inneres tragendes Strukturbauteil des Hauptflügels 24 ist ein Holm 26 vorgesehen. Der Vorflügel 12 ist an der Vorderseite des Hauptflügels 24 angeordnet und hat eine nach vorne gerichtete Profilnase 10 und eine dem Hauptflügel 24 zugewandte, nach hinten gerichtete Endkante 11.

Der Vorflügel 12 ist von einer eingefahrenen Reiseflugstellung I, in welcher der Vorflügel 12 an der Vorderseite des Hauptflügels 24 anliegt und dessen Profil zu einer für den Reiseflug geeigneten Form ergänzt, zur Erhöhung des Auftriebs unter Vergrößerung der Krümmung und der Ausdehnung des Flügelprofils in Flügeltiefenrichtung ausfahrbar. In einer ersten, teilweise ausgefahrenen Stellung II liegt der Vorflügel 12 mit seiner Endkante 11 am Hauptflügel 24 an, diese Stellung kann, weil sie zu einem für den Startvorgang geeigneten Flügelprofil beiträgt als Start-Stellung bezeichnet werden. In einer zweiten, weiter ausgefahrenen Stellung III ist der Vorflügel 12 dagegen mit seiner Endkante 11 von der Profilnase 23 des Hauptflügels 24 beabstandet, so dass ein Spalt 14 freigegeben ist, welcher energiereiche, das heißt eine hohe Strömungsgeschwindigkeit aufweisende Luft von der Unterseite des Vorflügels 12 zur Oberseite 21 des Hauptflügels 24 führt. Diese Stellung kann, da sie zu einer starken Auftriebserhöhung im Landeanflug geeignet ist, als Landeanflug-Stellung bezeichnet werden. In der Figur ist eine einzige teilweise ausgefahrene Stellung II als "erste" ausgefahrene Stellung und eine einzige, weiter ausgefahrene Stellung III als eine "zweite" ausgefahrene Stellung dargestellt, es versteht sich jedoch, dass es zwischen der Reiseflugstellung I, in welcher der Vorflügel 12 vollständig eingefahren an der Vorderseite des Hauptflügels 24 anliegt, und der dargestellten ersten ausgefahrenen Stellung II eine Anzahl von Stellungen gibt, in welchen die Endkante 11 des Vorflügels 12 am Hauptflügel 24, typischerweise an der Profilnase 23 desselben anliegt, und eine Anzahl von ausgefahrenen Stellungen zwischen der Stellung II und der Stellung III, in welchen der besagte Spalt 14 freigegeben ist.

Typischerweise ist der Vorflügel 12 von der Reiseflugstellung I kontinuierlich bis in die Stellung III bzw. die vollständig ausgefahrene Stellung ausfahrbar.

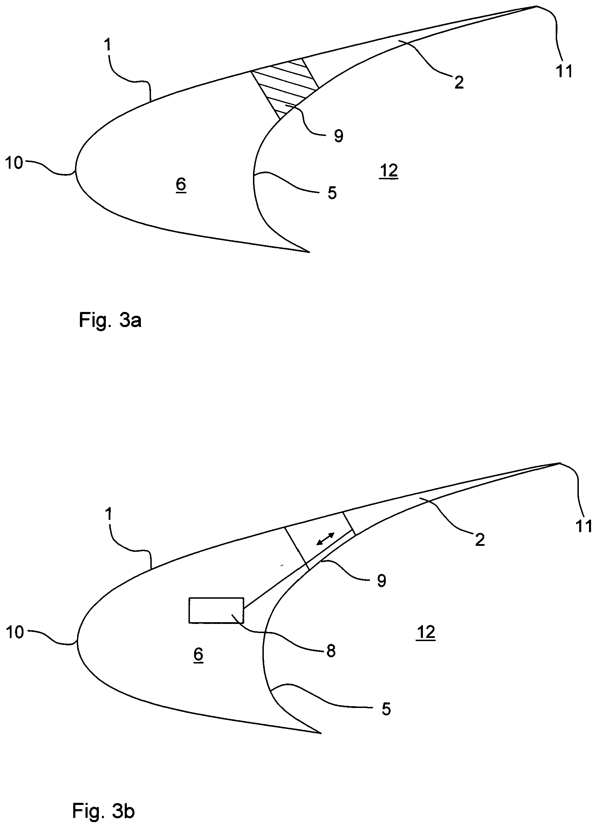

Wie die Fig. 1 und insbesondere die vergrößerten Figuren 2 sowie 3a) und 3b) zeigen, umfasst der Vorflügel 12 einen Hauptkörper 6 und einen Endkantenteil 2, welcher dem Hauptflügel 24 zugewandt ist. Der Endkantenteil 2 ist um die Spannweitenrichtung des Vorflügels 12, also im Wesentlichen um eine Richtung oder Achse, die mehr oder weniger parallel zur Flügelvorderkante verläuft, gegenüber dem Hauptkörper 6 abwinkelbar beweglich.

Die dem Hauptflügel 24 zugewandte Endkante 11 des Vorflügels 12 ist am Ende des Endkantenteils 2 vorgesehen und somit aufgrund des Umstandes, dass der Endkantenteil um die Spannweitenrichtung abwinkelbar beweglich ist, in der Lage, beim Ausfahren des Vorflügels 12 der Kontur des Hauptflügels 24 in dessen vorderem Bereich zu folgen und an dieser anzuliegen, wie in Fig. 1 zwischen der Reiseflugstellung I und der teilweise ausgefahrenen Stellung II gezeigt. Damit die Endkante 11 in der gewünschten Weise der Kontur des Hauptflügels 24 in dessen vorderem Bereich bzw. an der Profilnase 23 folgen kann, ist eine eine Anlagekraft erzeugende Einrichtung vorgesehen, so dass die Vorflügelendkante 11 bei eingefahrener und teilweise ausgefahrener Stellung des Vorflügels 12 am Hauptflügel 24 anliegt, es einen Spalt 14 also nicht gibt.

Bei der in Fig. 2 gezeigten Ausführungsform ist an der die Oberseite des Vorflügels 12 bildenden Außenhaut 1 ein biegeelastisches Element 3 vorgesehen, welches die Funktion eines Gelenks ausübt. An der Unterseite des Vorflügels 12 ist bei dem in Fig. 2 gezeigten Ausführungsbeispiel ein translatorisch-elastisches Element 4 vorgesehen, also ein Element, das in Richtung parallel zur unteren oder Rückseitenbeplankung des Vorflügels 12 unter Erzeugung einer elastischen Kraft oder Federkraft in seiner Länge veränderbar ist und dessen elastische Steifigkeit so dimensioniert ist, dass in dem gewünschten Bereich zwischen den Stellungen I und II die Endkante 11 zuverlässig an der Profilnase 23 des Hauptflügels 24 anliegt, der Spalt 14 also geschlossen ist, auch unter der auf den Endkantenteil 4 einwirkenden aerodynamischen Last, also der Druckdifferenz zwischen Flügeloberseite und Flügelunterseite. Die elastische Steifigkeit des biegeelastischen Elements 3 ist entsprechend bei der Auslegung der Steifigkeit des translatorisch-elastischen Elements 4 zusätzlich zu berücksichtigen.

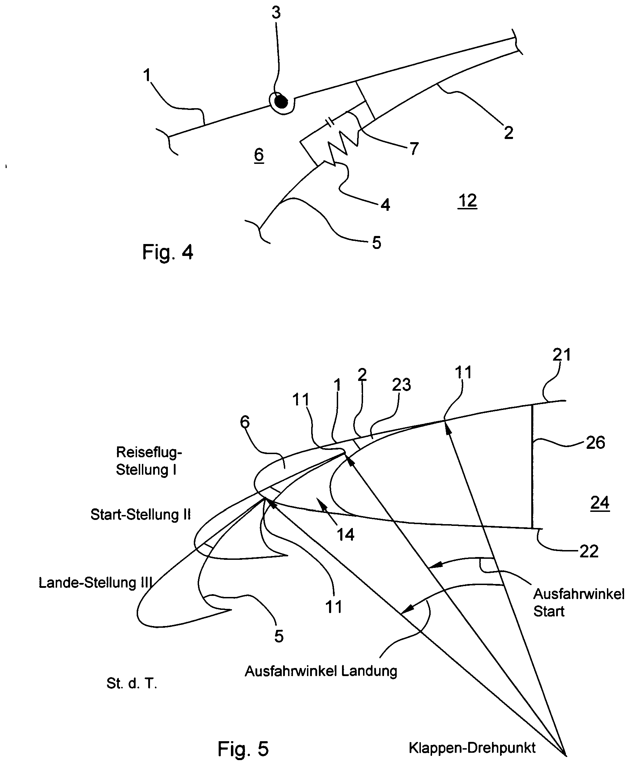

Beim weiteren Ausfahren des Vorflügels 12 über die Stellung II hinaus in Richtung zur Stellung III, vgl. Fig. 1, soll nun der Spalt 14 kontinuierlich geöffnet werden, d.h. die Endkante 11 nicht mehr an der Profilnase 23 des Hauptflügels 24 anliegen. Es kann beispielsweise ein Anschlagelement 7 vorgesehen sein, welches in der vergrößerten Ausschnittsdarstellung von Fig. 4 schematisch dargestellt ist, und/oder die Steifigkeit der elastischen Elemente 3 und 4 ist entsprechend auszulegen. In der Reiseflugstellung (Cruise-Position) ist das translatorisch-elastische Element 4 so stark gespannt, dass die Endkante 11 zuverlässig am Hauptflügel 24 anliegt, also irgendwo im Bereich des Übergangs von der Profilnase 23 zur oberen Beplankung 21 des Hauptflügels 24, wie es in Fig. 1 dargestellt ist. Beim Ausfahren des Vorflügels 12 von der Reiseflugstellung I zur Startstellung II verkürzt sich das translatorisch-elastische Element 4, da der Endkantenteil 2 beim Ausfahren des Vorflügels 12 zunehmend in Richtung zur Profilnase 23 hin abgewinkelt wird.

Zum Vergleich zeigt Fig. 5 eine schematische Darstellung ähnlich Fig. 1, für den Fall eines Vorflügels 12 mit starrem Endkantenbauteil. Es ist zu sehen, dass beim Ausfahren des Vorflügels 12 kontinuierlich ein Spalt 14 zwischen der Endkante 12 und der Profilnase 23 entsteht. Dies hat seinen Grund darin, dass der Radius der Bahn, typischerweise Kreisbahn, über die der Vorflügel 12 ausgefahren wird, größer ist als der Krümmungsradius der Profilnase 23 im entsprechenden Bereich.

Das die Anlagekraft erzeugende Einrichtung bildende biegeelastische Element kann auch durch das Endkantenteil 2 selbst gebildet sein, welches dann zumindest in einem Übergangsbereich, also einem dem Hauptkörper 6 des Vorflügels 12 benachbarten Bereich 9 durch ein elastisches, flexibles Material mit entsprechenden Rückstelleigenschaften, also einer entsprechenden elastischen Steifigkeit gebildet ist. Ein solches elastisches Material ist in Fig. 3a) (schematisiert durch einen schraffierten Bereich) gezeigt.

Andererseits kann die die Anlagekraft erzeugende Einrichtung durch einen (steuerbaren) Aktuator 8 gebildet sein, wie schematisch in Fig. 3b) dargestellt. Ein solcher Aktuator kann in verschiedener geeigneter Weise verwirklicht sein, beispielsweise durch Einsatz von Formgedächtnislegierungen oder Piezo-Aktuatoren. Auf diese Weise wäre auch eine aktive Steuerung der Spaltgröße 14 möglich.

Dies könnte dahingehend ausgenutzt werden, dass der Spalt 14 in der Startkonfiguration, Stellung II, bei gewöhnlichen Anstellwinkeln des Flugzeugs geschlossen ist, dass er sich jedoch bei ungewöhnlich hohen Anstellwinkeln öffnet, wodurch der maximal verfügbare Auftriebsbeiwert des Flugzeugs deutlich verbessert wird. Hierdurch können Flugsicherheit und Flugzeugauslegung vorteilhaft beeinflußt werden.

Das biegeelastische Element 3, welches die Gelenkfunktion erfüllt, wird sich typischerweise über im wesentlichen die ganze Spannweite des Vorflügels 12 erstrecken, also über die gesamte Länge des Vorflügels 12 in Spannweitenrichtung. Dieses Element 3 kann beispielsweise als ein durchgehendes Federelement aus Federstahl oder einem faserverstärktem Kunststoff hergestellt sein, welches eine entsprechende Biegeelastizität bzw. Flexibilität aufweist. Das biegeelastische Element 3 kann integral in der Außenhaut 1 vorgesehen sein, also als ein abschnittsweise flexibler Bereich am Überganz zwischen dem Hauptkörper 6 und dem Endkantenteil 2 des Vorflügels 12 in der Außenhaut 1, oder es kann als ein separates Teil hergestellt und dann an dieser Stelle in die Außenhaut 1 des Vorflügels 12 eingefügt sein. Die Fixierung in der Außenhaut 1 kann durch Kleben oder eine Nietverbindung in herkömmlicher Weise vorgenommen sein. Durch eine entsprechende Auslegung der Form und der Dicke des Elements 3 kann es an die Steifigkeits- und Festigkeitsanforderungen angepaßt werden, welche sich hier stellen.

Das translatorisch-elastische Element 4 kann ebenfalls als ein durchgehendes Federelement hergestellt sein, welches sich dann wiederum über im wesentlichen die ganze Spannweite des Vorflügels 12 erstreckt. Auch dieses kann aus Federstahl oder faserverstärktem Kunststoff hergestellt sein. Insbesondere bietet es sich an, dieses Element 4 in einer Blattfeder-Bauweise herzustellen. Es kann dann aus mehreren übereinanderliegenden und gegeneinander verschiebbaren Blechen bestehen. Durch eine geeignete Wahl von Anzahl und Stärke der Bleche können gleichzeitig die notwendige Festigkeit und die gewünschte elastische Steifigkeit erreicht werden.

Anstelle der Darstellung in den Figuren 2 und 4 können das biegeelastische Element 3 und das translatorisch-elastische Element 4 auch gegeneinander vertauscht sein, also ersteres unten und letzteres oben angeordnet sein. Auch könnte das Gelenk oder allgemeiner ausgedrückt, die Drehachse, um die der Endkantenteil 2 gegenüber dem Hauptkörper 6 abwinkelbar beweglich ist, sich im Inneren des Vorflügels 12 auf halber Höhe oder anderswo zwischen der oberen und der unteren Beplankung des Vorflügels 12 befinden, dann unterliegen sowohl die obere als auch die untere Beplankung des Vorflügels 12 einer entsprechenden Längenänderung. Insbesondere wäre dies der Fall beim Ausführungsbeispiel von Figur 3a) mit dem eleastischen Material im Übergangsbereich 9 zwischen Hauptkörper 6 und Endteil 2.

Der in Fig. 4 gezeigte Anschlag kann unabhängig oder zusammen mit dem die Anlagekraft erzeugenden Element 4; 8 vorgesehen sein, sei dies ein elastisches Element oder ein Aktuator.

### Bezugszeichenliste

- 1: Außenkante
- 2: Endkantenbauteil
- 3: biegeelastisches Element
- 4: translatorisch-elastisches Element
- 5: Rückseitenbeplankung
- 6: Hauptkörper
- 7: Anschlagelement
- 8: Aktuator
- 9: elastischer Bereich
- 10: Profilnase
- 11: Endkante
- 12: Vorflügel
- 14: Spalt
- 21: Obere Beplankung
- 22: Untere Beplankung
- 23: Profilnase
- 24: Hauptflügel
- 26: Holm

## Patentansprüche

1. Anordnung umfassend die Tragfläche eines Flugzeugs und einen an der Tragfläche angeordneten Vorflügel, wobei die Tragfläche einen Hauptflügel (24) mit einer oberen Beplankung (21), einer unteren Beplankung (22) und einer Profilnase (23) umfasst und der Vorflügel (12) an der Vorderseite des Hauptflügels (24) vorgesehen ist und eine nach vorne gerichtete Profilnase (10) und eine dem Hauptflügel (24) zugewandte, nach hinten gerichtete Endkante (11) aufweist und von einer eingefahrenen Reiseflugstellung (I), in welcher der Vorflügel (12) an der Vorderseite des Hauptflügels (24) anliegt und dessen Profil zu einer für den Reiseflug geeigneten Form ergänzt, zur Erhöhung des Auftriebs unter Vergrößerung der Krümmung und der Ausdehnung des Flügelprofils in Flügeltiefenrichtung ausfahrbar ist, wobei der Vorflügel (12) in einer ersten, teilweise ausgefahrenen Stellung (II) mit seiner Endkante (11) am Hauptflügel (24) anliegt und in einer zweiten, weiter ausgefahrenen Stellung (III) mit seiner Endkante (11) unter Freigabe eines energiereiche Luft von der Unterseite des Vorflügels (12) zur Oberseite (21) des Hauptflügels (24) führenden Spalts (14) von der Profilnase (23) des Hauptflügels (24) beabstandet ist,
wobei der Vorflügel (12) einen Hauptkörper (6) und einen dem Hauptflügel (24) zugewandten Endkantenteil (2) aufweist, der um die Spannweitenrichtung des Vorflügels (12) gegenüber dem Hauptkörper (6) abwinkelbar bewegbar ist,
wobei der Vorflügel (12) eine eine Anlagekraft erzeugende Einrichtung (4; 8; 9) aufweist, die derart ausgeführt ist, dass der Endkantenteil (2) beim Ausfahren des Vorflügels (12) von der Reiseflugstellung (I) zur **ersten, teilweise ausgefahrenen Stellung (II)** am Hauptflügel (24) mittels der eine Anlagekraft erzeugenden Einrichtung (4; 8; 9) zur Anlage der Vorflügelendkante (11) an der Profilnase (23) des Hauptflügels (24) derart beaufschlagt ist, dass die Endkante (11) des Endkantenteils (2) der Kontur des Hauptflüqels in dessen vorderem Bereich folgt und zunehmend in Richtung zur Profilnase (23) des Hauptflüqels (24) hin abgewinkelt wird, und
dass von der **ersten, teilweise ausgefahrenen Stellung (II)** in Richtung zur **zweiten, weiter ausgefahrenen Stellung (III)** ein Spalt (14) zwischen Endkantenteil (2) und Hauptflüqel (24) kontinuierlich geöffnet wird,
**dadurch gekennzeichnet,**
**dass** die die Anlagekraft erzeugende Einrichtung durch ein elastisches Element gebildet ist.

2. Anordnung nach Anspruch 1, **dadurch gekennzeichnet, dass** der Endkantenteil (2) über ein Gelenk (3) mit dem Hauptkörper (6) des Vorflügels (12) verbunden ist, um das der Endkantenteil (2) um die Spannweitenrichtung des Vorflügels (12) gegenüber dem Hauptkörper (6) abwinkelbar beweglich ist.

3. Anordnung nach Anspruch 2, **dadurch gekennzeichnet, dass** das Gelenk durch ein biegeelastisches Element (3) gebildet ist.

4. Anordnung nach Anspruch 3, **dadurch gekennzeichnet, dass** das biegeelastische Element (3) an einer die Oberseite des Vorflügels (12) bildenden Außenhaut (1) angeordnet ist.

5. Anordnung nach Anspruch 4, **dadurch gekennzeichnet, dass** die die Anlagekraft erzeugende Einrichtung (4; 8) die Unterseite des Endkantenteils (2) mit dem Hauptkörper (6) des Vorflügels (12) verbindend vorgesehen ist.

6. Anordnung nach Anspruch 1, **dadurch gekennzeichnet, dass** das elastische Element (4) ein translatorisch-elastisches Element ist.

7. Anordnung nach einem der voranstehenden Ansprüche, **dadurch gekennzeichnet, dass** die eine Anlagekraft erzeugende Einrichtung (4; 8; 9) als biegeelastisches Element gebildet ist, welches zwischen dem Hauptkörper (6) und dem Endkantenteil (2) und zumindest in einem dem Hauptkörper (6) des Vorflügels (12) benachbarten Bereich (9) durch ein elastisches, flexibles Material gebildet ist.

8. Anordnung nach einem der Ansprüche 1 und 3 bis 5, **dadurch gekennzeichnet, dass** das biegeelastische Element (3; 9) sich über im Wesentlichen die ganze Spannweite des Vorflügels (12) erstreckt.

9. Anordnung nach dem Anspruch 6 oder 7, **dadurch gekennzeichnet, dass** das translatorisch-elastische Element (4) sich über im wesentlichen die ganze Spannweite des Vorflügels (12) erstreckt.

10. Anordnung nach einem der Ansprüche 1 bis 9, **dadurch gekennzeichnet, dass** ein Anschlagelement (7) zur Begrenzung der Abwinkelung des Endkantenbauteils (2) gegenüber dem Hauptkörper (6) des Vorflügels (12) vorgesehen ist.

11. Anordnung nach Anspruch 10, **dadurch gekennzeichnet, dass** das Anschlagelement (7) an dem die Anlagekraft erzeugenden Element (4; 8) vorgesehen ist.

## Claims

1. Arrangement comprising the aerofoil of an aircraft and a leading-edge slat arranged on the aerofoil, wherein the aerofoil comprises a main wing (24) with an upper covering (21), a lower covering (22) and a profile nose (23), and the leading-edge slat (12) is provided on the front side of the main wing (24) and has a forwardly directed profile nose (10) and, facing the main wing (24), a rearwardly directed end edge (11) and can be extended from a retracted cruise flight position (I), in which the leading-edge slat (12) bears against the front side of the main wing (24) and supplements the profile thereof to form a shape suitable for cruising flight, in order to increase the lift while increasing the curvature and the extension of the wing profile in the wing chordwise direction, wherein, in a first, partially extended position (II), the leading-edge slat (12) bears against the main wing (24) by way of its end edge (11) and, in a second, further extended position (III), has its end edge (11) spaced apart from the profile nose (23) of the main wing (24) while freeing a gap (14) which guides energy-rich air from the lower side of the leading-edge slat (12) to the upper side (21) of the main wing (24), wherein the leading-edge slat (12) has a main body (6) and an end edge part (2) which faces the main wing (24) and which is movable around the spanwise direction of the leading-edge slat (12) so as to be able to be angled with respect to the main body (6), wherein the leading-edge slat (12) has a device (4; 8; 9) which generates a bearing force and which is configured in such a way that, upon extension of the leading-edge slat (12) from the cruising flight position (I) towards the first, partially extended position (II) on the main wing (24), the end edge part (2) is urged by means of the device (4; 8; 9) generating a bearing force to cause the leading-edge slat end edge (11) to bear against the profile nose (23) of the main wing (24) in such a way that the end edge (11) of the end edge part (2) follows the contour of the main wing in the front region thereof and is increasingly angled in the direction towards the profile nose (23) of the main wing (24), and that a gap (14) is continuously opened between the end edge part (2) and main wing (24) from the first, partially extended position (II) in the direction of the second, further extended position (III),
**characterized**
**in that** the device generating the bearing force is formed by an elastic element.

2. Arrangement according to Claim 1, **characterized in that** the end edge part (2) is connected to the main body (6) of the leading-edge slat (12) via an articulation (3) around which the end edge part (2) is movable around the spanwise direction of the leading-edge slat (12) so as to be able to be angled with respect to the main body (6).

3. Arrangement according to Claim 2, **characterized in that** the articulation is formed by a flexurally elastic element (3).

4. Arrangement according to Claim 3, **characterized in that** the flexurally elastic element (3) is arranged on an outer skin (1) forming the upper side of the leading-edge slat (12).

5. Arrangement according to Claim 4, **characterized in that** the device (4; 8) generating the bearing force is provided so as to connect the lower side of the end edge part (2) to the main body (6) of the leading-edge slat (12).

6. Arrangement according to Claim 1, **characterized in that** the elastic element (4) is a translationally elastic element.

7. Arrangement according to one of the preceding claims, **characterized in that** the device (4; 8; 9) generating a bearing force is formed as a flexurally elastic element which is formed by an elastic, flexible material between the main body (6) and the end edge part (2) and at least in a region (9) adjacent to the main body (6) of the leading-edge slat (12).

8. Arrangement according to one of Claims 1 and 3 to 5, **characterized in that** the flexurally elastic element (3; 9) extends over substantially the entire span of the leading-edge slat (12).

9. Arrangement according to Claim 6 or 7, **characterized in that** the translationally elastic element (4) extends over substantially the entire span of the leading-edge slat (12).

10. Arrangement according to one of Claims 1 to 9, **characterized in that** a stop element (7) is provided for limiting the angling of the end edge component (2) with respect to the main body (6) of the leading-edge slat (12).

11. Arrangement according to Claim 10, **characterized in that** the stop element (7) is provided on the element (4; 8) generating the bearing force.

## Revendications

1. Ensemble comprenant la surface portante d'un avion et un bec de bord d'attaque disposé sur ladite surface portante, celle-ci étant une aile principale (24) comportant un revêtement supérieur (21), un revêtement inférieur (22) et un profil de bord d'attaque (23), et le bec de bord d'attaque (12) étant prévu au niveau de la face avant de l'aile principale (24), et présentant un profil de bord d'attaque (10) orienté vers l'avant et un bord d'extrémité (11) orienté vers l'aile principale (24), dirigé vers l'arrière, ledit bec de bord d'attaque (12) pouvant être déployé dans la direction de la profondeur de l'aile depuis une position de vol de croisière rétractée (I), dans laquelle le bec de bord d'attaque (12) s'applique contre la face avant de l'aile principale (24) et en complète le profil pour lui conférer une forme adaptée au vol de croisière, pour augmenter la portance en augmentant la courbure et l'étendue du profil d'aile, le bord d'extrémité (11) du bec de bord d'attaque (12) s'appliquant contre l'aile principale (24) dans une première position de déploiement partiel (II) et, dans une deuxième position de poursuite du déploiement (III), le bord d'extrémité (11) du bec de bord d'attaque (12) étant écarté du profil de bord d'attaque (23) de l'aile principale (24) moyennant l'établissement d'un interstice (14) qui guide de l'air à grande énergie depuis l'intrados du bec de bord d'attaque (12) vers l'extrados (21) de l'aile principale (24), ledit bec de bord d'attaque (12) comportant un corps principal (6) et une partie de bord d'extrémité (2) orientée vers l'aile principale (24), ladite partie pouvant être inclinée vers le bas autour de la direction de l'envergure du bec de bord d'attaque (12) pour former un angle par rapport au corps principal (6),
le bec de bord d'attaque (12) comportant un dispositif (4, 8, 9) de génération de force d'appui réalisé de sorte que, lorsque le bec de bord d'attaque (12) se déploie de la position de vol de croisière (I) à la **première position de déploiement partiel (II),** la partie de bord d'extrémité (2) soit sollicitée au niveau de l'aile principale (24) par le dispositif (4, 8, 9) de génération d'une force d'appui pour appliquer le bord d'extrémité (11) du bec de bord d'attaque contre le profil de bord d'attaque (23) de l'aile principale (24), de sorte que le bord d'extrémité (11) de la partie de bord d'extrémité (2) suive le contour de la région avant de l'aile principale et forme un angle croissant d'inclinaison vers le bas dans la direction du profil de bord d'attaque (23) de l'aile principale (24)
et de sorte que, lors du passage de la **première position de déploiement partiel (II)** à la **deuxième position de poursuite du déploiement (III),** un interstice (14) soit établi et maintenu entre la partie de bord d'extrémité (2) et l'aile principale (24), **caractérisé en ce que**
le dispositif de génération de force d'appui est constitué par un élément élastique.

2. Ensemble selon la revendication 1, **caractérisé en ce que** la partie de bord d'extrémité (2) est reliée au corps principal (6) du bec de bord d'attaque (12) par une articulation (3) autour de laquelle ladite partie de bord d'extrémité (2) peut être inclinée vers le bas autour de la direction de l'envergure du bec de bord d'attaque (12) pour former un angle par rapport au corps principal (6).

3. Ensemble selon la revendication 2, **caractérisé en ce que** l'articulation est constituée par un élément (3) élastique en flexion.

4. Ensemble selon la revendication 3, **caractérisé en ce que** l'élément (3) élastique en flexion est disposé sur une peau externe (1) constituant l'extrados du bec de bord d'attaque (12).

5. Ensemble selon la revendication 4, **caractérisé en ce que** le dispositif (4 ; 8) de génération de force d'appui est prévu de manière à relier l'intrados de la partie de bord d'extrémité (2) avec le corps principal (6) du bec de bord d'attaque.

6. Ensemble selon la revendication 1, **caractérisé en ce que** l'élément élastique (4) est un élément élastique en translation.

7. Ensemble selon l'une quelconque des revendications précédentes, **caractérisé en ce que** le dispositif (4, 8, 9) de génération de force d'appui est réalisé sous forme d'élément élastique en flexion constitué d'un matériau souple et élastique entre le corps principal (6) et la partie de bord d'extrémité (2) et dans au moins une région (9) jouxtant le corps principal (6) du bec de bord d'attaque (12).

8. Ensemble selon l'une quelconque des revendications 1 et 3 à 5, **caractérisé en ce que** l'élément élastique en flexion (3 ; 9) s'étend essentiellement sur toute l'envergure du bec de bord d'attaque (12).

9. Ensemble selon l'une quelconque des revendications 6 et 7, **caractérisé en ce que** l'élément élastique en translation (4) s'étend essentiellement sur toute l'envergure du bec de bord d'attaque (12).

10. Ensemble selon l'une quelconque des revendications 1 à 9, **caractérisé en ce qu'**un élément de butée (7) est prévu pour limiter l'inclinaison vers le bas de la partie de bord d'extrémité (2) par rapport au corps principal (6) du bec de bord d'attaque (12).

11. Ensemble selon la revendication 10, **caractérisé en ce que** de butée (7) est prévu sur générateur de force d'appui (4, 8).
